(19)

Europäisches
Patentamt
European
Patent Office
Office européen
des brevets

(11) **EP 4 492 498 A1**

(12) **EUROPEAN PATENT APPLICATION**

(43) Date of publication:
**15.01.2025 Bulletin 2025/03**

(21) Application number: **23214374.3**

(22) Date of filing: **05.12.2023**

(51) International Patent Classification (IPC):
*H01M 4/58* (2010.01)        *H01M 10/0525* (2010.01)
*H01M 10/0567* (2010.01)      *H01M 10/0569* (2010.01)

(52) Cooperative Patent Classification (CPC):
**H01M 10/0569; H01M 4/5825; H01M 10/0525;
H01M 10/0567;** H01M 2004/028; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2023 CN 202310858153**

(71) Applicants:
• **AESC Dynamics Technology (Jiangsu) Ltd.
214443 Wuxi City, Jiangsu Province (CN)**
• **AESC Dynamics Technology (Hubei) Ltd.
Shiyan, Hubei Province 442002 (CN)**
• **AESC Dynamics Technology (Ordos) Ltd.
Ordos, Inner Mongolia Autonomous Region
017200 (CN)**
• **AESC Dynamics Technology (Hebei) Ltd.
Cangzhou City, Hebei Province 061758 (CN)**
• **AESC Intelligent Innovation Dynamics
Technology
(Shanghai) Ltd.
Shanghai 201315 (CN)**

(72) Inventors:
• **YU, Le
Pudong New Area Shanghai, 201315 (CN)**
• **LIU, Xingwei
Pudong New Area Shanghai, 201315 (CN)**
• **LYU, Wenbin
Pudong New Area Shanghai, 201315 (CN)**

(74) Representative: **Becker, Eberhard
Becker Kurig & Partner
Patentanwälte mbB
Bavariastraße 7
80336 München (DE)**

<u>Remarks:</u>
Amended claims in accordance with Rule 137(2)
EPC.

(54) **LITHIUM-ION BATTERY AND APPLICATION THEREOF**

(57)      Disclosed are a lithium-ion battery and an application thereof. The lithium-ion battery includes: a positive electrode sheet (10), the double-sided density of the positive electrode sheet (10) is greater than or equal to 35 mg/cm$^2$, and the positive electrode sheet (10) includes a positive electrode active material including lithium iron manganese phosphate; a negative electrode sheet (20); a separator (30) located between the positive electrode sheet (10) and the negative electrode sheet (20); and an electrolyte (40) filled among the positive electrode sheet (10), the negative electrode sheet (20) and the separator (30). The electrolyte (40) includes a non-aqueous solvent, the non-aqueous solvent includes ethylene carbonate, and the mass fraction of the ethylene carbonate in the non-aqueous solvent is 10 wt%~35 wt%. Through the lithium-ion battery and its application provided by the present disclosure, the cycle performance and performance of the lithium-ion battery at high temperatures may be improved.

**Description**

BACKGROUND

Technical Field

The disclosure relates to the technical field of lithium-ion batteries, and in particular to a lithium-ion battery and an application thereof.

Description of Related Art

Currently, the rapid development of lithium-ion batteries in the fields of electric vehicles and large-scale energy storage has made the lithium-ion battery market size to expand considerably. In particular, lithium iron phosphate batteries have become the mainstream in the development of lithium-ion batteries because they are characterized in low cost and long cycle life. However, the specific capacity of current lithium iron phosphate substances is close to its theoretical value, and therefore the energy density of lithium iron phosphate batteries has nearly reached the limit.

Lithium iron manganese phosphate is obtained by replacing part of the iron in lithium iron phosphate with manganese, thereby increasing the energy density of lithium iron manganese phosphate without increasing the cost of the positive electrode active material. However, the conductivity of lithium iron manganese phosphate is poor. In lithium-ion batteries, the dynamics performance of battery is poor, which in turn leads to the attenuation of cycle performance. During the cycle of lithium iron manganese phosphate batteries, due to the dissolution of manganese ions, the solid electrolyte interphase (SEI) is destructed, which causes the increase of consumption of active lithium in the battery and increase of the resistance of the negative electrode SEI film, and the cycle life of the battery is affected accordingly.

SUMMARY

The present disclosure provides a lithium-ion battery and an application thereof. Through the lithium-ion battery and the application thereof provided by the present disclosure, the stability of the electrolyte may be improved, the cycle performance of the lithium-ion battery may be enhanced, and the performance of lithium-ion batteries at high temperatures may be increased.

In order to solve the above technical problems, the present disclosure provides a lithium-ion battery, which at least includes the following ingredients:

a positive electrode sheet, the double-sided density of the positive electrode sheet is greater than or equal to 35 mg/cm$^2$, and the positive electrode sheet includes a positive electrode active material, and the positive electrode active material includes lithium manganese iron phosphate;
a negative electrode sheet;
a separator located between the positive electrode sheet and the negative electrode sheet; and
an electrolyte filled between the positive electrode sheet, the negative electrode sheet and the separator, wherein the electrolyte includes a non-aqueous solvent, the non-aqueous solvent includes ethylene carbonate, and the mass fraction of the ethylene carbonate accounts for 10 wt%~35 wt% in the non-aqueous solvent.

In an embodiment of the present disclosure, the molecular formula of the lithium iron manganese phosphate is $Li_xMn_yFe_{1-y}PO_4$, where $0.95 \leq x \leq 1.05$ and $0.4 \leq y \leq 0.7$.

In an embodiment of the present disclosure, the mass fraction of the ethylene carbonate accounts for 15 wt%~30 wt% in the non-aqueous solvent.

In an embodiment of the present disclosure, the electrolyte further includes a positive electrode film-forming additive, the positive electrode film-forming additive includes 1,3-propane sultone, and the mass content of the positive electrode film-forming additive accounts for 0.01 wt~5 wt% in the electrolyte.

In an embodiment of the present disclosure, the electrolyte further includes a negative electrode film-forming additive, the negative electrode film-forming additive includes vinylene carbonate, and the mass content of the negative electrode film-forming additive accounts for 0.1 wt~ 10 wt% in the electrolyte.

In an embodiment of the present disclosure, the non-aqueous solvent further includes any one or a combination of at least two of dimethyl carbonate, ethyl methyl carbonate, propylene carbonate or diethyl carbonate.

In an embodiment of the present disclosure, the non-aqueous solvent further includes ethyl methyl carbonate and dimethyl carbonate, and the mass ratio of ethylene carbonate, ethyl methyl carbonate and dimethyl carbonate is (0.5-4.5) :(2.75-4.75):(2.75-4.75).

In an embodiment of the present disclosure, the mass content of the non-aqueous solvent accounts for 60 wt% ~ 85 wt% in the electrolyte.

In an embodiment of the present disclosure, the electrolyte further includes a lithium salt, and the lithium salt includes any one or a combination of at least two of $LiPF_6$, $LiBF_4$, LiFSI, LiTFSI, LiBOB, LiODFP, LiODFB, $LiPO_2F_2$ or $CF_3SO_3Li$.

In an embodiment of the present disclosure, the concentration of the lithium salt in the electrolyte is 0.1 mol/L~2 mol/L.

The present disclosure further provides an electrochemical device, including the above-mentioned lithium-ion battery.

In summary, the present disclosure provides a lithium-ion battery and an application thereof, which may improve the conductivity of the electrolyte, ensure the oxidation stability of the electrolyte, enhance the dynamics of the lithium-ion battery, and increase the cycle performance. A dense CEI film may be generated on the surface of the positive electrode to reduce the oxidative decomposition of the electrolyte. A dense SEI film may be generated on the negative electrode, and the SEI film may repaired continuously during the cycle, thereby reducing the damage to the SEI film of the negative electrode caused by the dissolution of manganese ions, and effectively improving the cycle life of lithium iron manganese phosphate batteries. By controlling the type and content of solvents, positive electrode additives, and negative electrode additives, the stability of the electrolyte is improved, the cycle performance of the lithium-ion battery is enhanced, and the performance of the lithium-ion battery at high temperatures is increased.

BRIEF DESCRIPTION OF THE DRAWINGS

In order to explain the embodiments of the present disclosure or the technical solutions in the related art more clearly, the drawings needed to be used in the description of the embodiments or the related art will be briefly introduced below. Clearly, the drawings in the following description are only some embodiments of the present disclosure. For those of ordinary skill in the art, other drawings may be obtained based on these drawings without exerting creative efforts.

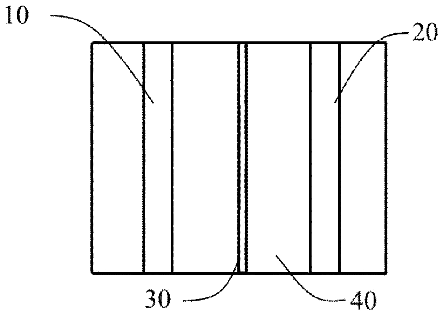

The FIGURE is a schematic structural view of a lithium-ion battery in an embodiment of the present disclosure.

REFERENCE SIGNS LIST

    10: positive electrode sheet
    20: negative electrode sheet
    30: separator
    40: electrolyte

DESCRIPTION OF THE EMBODIMENTS

The following describes the implementation of the present disclosure through specific examples. Those skilled in the art can easily understand other advantages and effects of the present disclosure from the contents disclosed in this specification. The present disclosure can also be implemented or applied through other different specific implementations. Various details in this specification can also be modified or changed in various ways based on different viewpoints and applications without departing from the spirit of the present disclosure.

It should be understood that the disclosure may be embodied in different forms and should not be construed as limited to the embodiments set forth herein. Rather, these embodiments are provided so that this disclosure will be thorough and complete, and will fully convey the scope of the disclosure to those skilled in the art.

The technical solution of the present disclosure will be further described in detail below with reference to several embodiments and drawings. Clearly, the described embodiments are only some of the embodiments of the present disclosure, rather than all of the embodiments. Based on the embodiments of the present disclosure, all other embodiments obtained by those of ordinary skill in the art without any creative work fall within the scope of protection of the present disclosure.

Please refer to the FIGURE. The present disclosure provides a lithium-ion battery, including a positive electrode sheet 10, a negative electrode sheet 20, a separator 30 and an electrolyte 40. The separator 30 is located between the positive electrode sheet 10 and the negative electrode sheet 20. Electrolyte 40 is filled between the positive electrode sheet 10, the negative electrode sheet 20 and separator 30. The present disclosure does not limit the type and shape of the lithium-ion battery. In an embodiment of the present disclosure, the lithium-ion battery is a primary battery or a secondary battery. The secondary battery is, for example, a soft-pack battery, a hard-housing battery or a cylindrical battery. In this embodiment, a soft-packed secondary battery is taken as an example for explanation.

Please refer to the FIGURE. In an embodiment of the present disclosure, the positive electrode sheet 10 includes a positive electrode current collector and a positive electrode active material layer coated on one side of the positive electrode current collector. The positive electrode active material layer includes a positive electrode active material, a binder, a conductive agent and so on. The positive electrode current collector may be, for example, a foil substance formed by nickel, titanium, aluminum, nickel, silver, stainless steel, or carbon processed through surface treatment. In addition to foil substances, the positive electrode current collector may also be adopted in various forms including any one of or multiple combinations of film, mesh, pore, foam or non-woven fabric. The thickness of the positive electrode current collector is, for example, 8 $\mu$m to 15 $\mu$m. In this embodiment, the positive electrode current collector is, for example, aluminum foil.

In an embodiment of the present disclosure, the positive electrode active material is selected from lithium iron manganese phosphate, for example, and the molecular formula of lithium iron manganese phosphate is $Li_xMn_yFe_{1-y}PO_4$, where $0.95 \leq x \leq 1.05$ and $0.4 \leq y \leq 0.7$. The binder is, for example, selected from any one or more polyvinylidene fluoride (PVDF), polyamide (PA), polyacrylonitrile (PAN), polyacrylate, polyvinylether, polymethyl methacrylate (PMMA), ethylene-propylene-diene terpolymer (EPDM), polyhexafluoropropylene, or polymerized styrene butadiene rubber (SBR). The conductive agent is, for example, selected from any one or more of conductive carbon black (super P, SP), acetylene black, carbon nanotubes, graphene, and the like.

Please refer to the FIGURE. In an embodiment of the present disclosure, the positive electrode active material is $LiMn_{0.6}Fe_{0.4}PO_4$, the binder is selected from polyvinylidene fluoride, and the conductive agent is selected from acetylene black, for example. After the positive electrode active material, acetylene black and polyvinylidene fluoride are mixed in a weight ratio of 95:3:2, for example, an organic solvent is added and stirred until the system becomes homogeneous to obtain a positive electrode slurry. The organic solvent is, for example, selected from N-Methylpyrrolidone (NMP). After the positive electrode slurry is evenly coated on the aluminum foil for drying, and then the dried aluminum foil is subjected to processes such as cold pressing to obtain the positive electrode sheet 10. In this embodiment, the double-sided density of the positive electrode sheet is greater than or equal to 35 mg/cm$^2$.

Please refer to the FIGURE. In an embodiment of the present disclosure, the negative electrode sheet 20 includes, for example, a negative electrode current collector and a negative electrode active material layer coated on at least one side of the negative electrode current collector. The negative electrode active material layer includes a negative electrode active material, a binder, a conductive agent and a thickener, etc. The negative electrode current collector is, for example, selected from one of a copper foil current collector, a composite copper foil current collector, a carbon current collector, a foamed copper current collector, a stainless steel current collector, etc., and the thickness of the negative electrode current collector is, for example, 8 $\mu$m~15 $\mu$m.

Please refer to the FIGURE. In an embodiment of the present disclosure, the negative electrode active material is selected from any one or a combination of at least two of a soft carbon, a hard carbon, an artificial graphite, a natural graphite, a silicon, a silicon oxide compound, a silicon carbon compound, or a lithium titanate. The binder is, for example, selected from any one or more of polyvinylidene fluoride, polyamide, polypropylene, polyacrylate, polyvinyl ether, polymethylmethacrylate, polyhexafluoropropylene or styrene-butadiene rubber. The conductive agent is, for example, selected from any one or more of a conductive carbon black, an acetylene black, a carbon nanotube, a graphene, and the like. In an embodiment of the present disclosure, the negative electrode current collector is selected from a copper foil, for example; the negative electrode active material is selected from graphite, for example; the conductive agent is selected from an acetylene black, for example; the binder is selected from a styrene-butadiene rubber, for example; and the thickener is selected from sodium carboxymethyl cellulose, for example. In an embodiment of the present disclosure, the graphite, the acetylene black, the styrene-butadiene rubber and the sodium carboxymethyl cellulose are mixed at a mass ratio of, for example, 96:2:1:1, deionized water is added, and the mixture is fully stirred to obtain a negative electrode slurry. The negative electrode slurry is evenly coated on the copper foil, and processes such as drying and cold pressing are carried out to obtain the negative electrode sheet 20.

Please refer to the FIGURE. In an embodiment of the present disclosure, the separator 30 is, for example, a polyethylene (PE) film, a polypropylene (PP) film, a fiberglass film, a polyethylene film or a composite film, and the thickness of the separator is, for example, 9 $\mu$m ~ 15 $\mu$m. In this embodiment, polyethylene in a thickness of 8 $\mu$m ~ 10 $\mu$m is selected as the base film for the separator, and a nano-alumina coating with a thickness of 2 $\mu$m ~ 4 $\mu$m is coated on the base film to obtain the separator 30.

Please refer to the FIGURE. In an embodiment of the present disclosure, the electrolyte 40 at least includes a non-aqueous solvent, a lithium salt, and an additive. When the double-sided density of the positive electrode sheet 10 is greater than or equal to 35 mg/cm$^2$, the non-aqueous solvent includes ethylene carbonate (EC) with a high dielectric constant, and the mass fraction of ethylene carbonate accounts for 10 wt%~35 wt% in the non-aqueous solvent, or for example, 15 wt%~30 wt%, to improve the conductivity of the electrolyte. If the content of EC is too low, it may not be ensured that the electrolyte 40 has a high conductivity, and the dynamics performance of the high-density lithium iron manganese phosphate battery may not be improved. If the content of EC is too high, the oxidation stability of the electrolyte 40 will be reduced, and irreversible oxidative decomposition reaction will occur in the positive electrode, and therefore the cycle performance of the battery will be deteriorated. Therefore, by adding and controlling the content of ethylene carbonate in the electrolyte, the conductivity of the electrolyte may be improved; in the meantime, the amount of added ethylene carbonate may be controlled to prevent the deterioration of the oxidation stability of the electrolyte.

Please refer to the FIGURE. In an embodiment of the present disclosure, the non-aqueous solvent further includes, for example, any one or a combination of at least two of dimethyl carbonate (DMC), ethyl methyl carbonate (EMC), propylene carbonate (PC) or diethyl carbonate (DEC). Non-aqueous solvents include, for example, ethyl methyl carbonate and dimethyl carbonate, and the mass ratio of ethylene carbonate, ethyl methyl carbonate and dimethyl carbonate is (0.5-4.5):(2.75-4.75):(2.75-4.75). In an embodiment of the present disclosure, the mass content of the non-aqueous solvent accounts for 60%-85% in the electrolyte 40, for example. When preparing the electrolyte, when the content of nitrogen in the glove box is 99.999%, the actual content of oxygen in the glove box is less than or equal to 0.1 ppm, and the content of moisture is less than or equal to 0.1 ppm, after mixing the battery-grade ethylene carbonate, ethyl methyl carbonate and dimethyl carbonate are mixed evenly, the fully dried lithium salt is added to the above-mentioned non-aqueous solvent, and an additive is added to prepare the non-aqueous electrolyte of the lithium-ion battery.

Please refer to the FIGURE. In an embodiment of the present disclosure, the additive further include a positive electrode film-forming additive and a negative electrode film-forming additive. The positive electrode film-forming additive includes 1,3-propanesultone (PS), and the mass content of the positive electrode film-forming additive accounts for 0.01 wt~5 wt% in the electrolyte 40, for example, or 0.1 wt~2 wt%, for example. The positive electrode film-forming additive may generate a dense cathode-electrolyte interface (CEI) on the surface of the positive electrode, thus reducing the oxidative decomposition of the electrolyte 40. If the mass content of the positive electrode film-forming additive is too low, a dense CEI film cannot be formed on the positive electrode to prevent oxidative decomposition of the electrolyte 40. If the content of the positive electrode film-forming additive is too high, an excessively thick CEI film will be formed, which increases the interface resistance of the positive electrode and results in a decrease in dynamics performance and cycle life of the battery. Therefore, the mass content of the positive electrode film-forming additive is controlled to ensure the stability of the positive electrode, reduce the decomposition of the electrolyte, and improve the cycle performance of the lithium-ion battery.

Please refer to the FIGURE. In an embodiment of the present disclosure, the negative electrode film-forming additive includes vinylene carbonate (VC), and the mass content of the negative electrode film-forming additive accounts for 0.1 wt~10 wt% in the electrolyte 40, or 0.5 wt %~3 wt%, for example, to form a high-quality SEI film on the negative electrode. If the mass content of VC is too low, a dense SEI film may not be formed, and the SEI film may not be continuously repaired in time during the cycle. Under the circumstances, the manganese ions dissolved from the positive electrode will rapidly deteriorate the negative electrode interface, causing loss of lithium and destruction of dynamics performance of the negative electrode, and the cycle life of the battery will decay rapidly. If the mass percentage of VC is too high, the viscosity of the electrolyte will increase rapidly, causing the conductivity of the electrolyte 40 to drop and deteriorating the dynamics performance of the lithium-ion battery. Therefore, controlling the content of VC enables VC to form a dense SEI film on the negative electrode, and allow the SEI film to be repaired continuously during the cycle, thus reducing the damage to the SEI film of the negative electrode caused by the dissolution of manganese ions. Through the use of EC, PS and VC altogether, the dynamic performance of the lithium-ion battery is improved, and the cycle life of the lithium iron manganese phosphate battery may be increased effectively.

Please refer to the FIGURE. In an embodiment of the present disclosure, the electrolyte 40 further includes a lithium salt. The lithium salt is selected from, for example, any one or a combination of at least two of lithium hexafluorophosphate ($LiPF_6$), lithium tetrafluoroborate ($LiBF_4$), lithium bisfluorosulfonimide (LiFSI), lithium bistrifluoromethanesulfonimide (LiTFSI), lithium bisoxaloborate (LiBOB), lithium difluorobisoxalate phosphate (LiODFP), lithium difluorooxalateborate (LiODFB), lithium difluorophosphate ($LiPO_2F_2$) or lithium triflate ($LiCF_sSO_s$). In an embodiment of the present disclosure, the concentration of the lithium salt in the electrolyte 40 is 0.1 mol/L~2 mol/L.

Please refer to the FIGURE. In an embodiment of the present disclosure, the above-mentioned positive electrode sheet 10, the separator 30, and the negative electrode sheet 20 are stacked in order, so that the separator 30 is located between the positive electrode sheet 10 and the negative electrode sheet 20 to separate them, and they are laminated to obtain a bare battery cell. The bare battery cell is put into the aluminum plastic film, then baked at 80°C to remove water, the electrolyte 40 is injected thereto and sealed. Thereafter, the sealed bare battery cell is kept standing and subjected to hot and cold pressing, formation, clamping and volume division to obtain the finished soft-packed lithium-ion battery.

Hereinafter, the present disclosure will be explained more specifically by referring to examples, which should not be construed as limiting. Appropriate modifications can be made within the scope consistent with the gist of the present disclosure, and the modifications shall all fall within the technical scope of the present disclosure.

Example 1

Preparation of positive electrode sheet: The positive electrode active material selected from $EiMn_{0.6}Fe_{0.4}PO_4$, the conductive agent selected from acetylene black and the binder selected from polyvinylidene fluoride were mixed in a mass ratio of 95:3:2. After the positive electrode active material, the binder and the conductive agent were mixed evenly, the solvent selected from N-Methylpyrrolidone was added and stirred until the mixture was uniform and transparent to obtain a positive electrode slurry. The positive electrode slurry was evenly coated on the aluminum foil and dried, and then cold pressed to obtain a positive electrode sheet. The double-sided density of the positive electrode sheet is 38 mg/cm$^2$.

Preparation of negative electrode sheet: The negative active material selected from graphite, the conductive agent selected from acetylene black, the binder selected from styrene-butadiene rubber and the thickener selected from sodium carboxymethyl cellulose were mixed in a mass ratio of 96:2:1:1, and deionized water was added and stirred thoroughly to obtain the negative electrode slurry. The negative electrode slurry was evenly coated on the copper foil and dried, and then cold pressed to obtain the negative electrode sheet.

Preparation of electrolyte: Under the conditions that the content of nitrogen in the glove box was 99.999%, the actual content of oxygen in the glove box was 0.1 ppm, and the content of moisture was 0.1 ppm, the non-aqueous solvent was composed of ethylene carbonate, ethyl methyl carbonate and carbonic acid in a mass ratio of 2:4:4. Taking the total mass of the electrolyte as 100%, the lithium salt and the additive were added such that the concentration of lithium hexafluorophosphate was 1 mol/L, the mass percentage of PS was 1 wt% in content, and the mass percentage of VC was 2wt% in content, and the electrolyte was obtained.

Selection of separator: 9 $\mu$m of polyethylene was selected as the base film, and a nano-alumina coating having a thickness of 3 $\mu$m was coated on the base film to obtain a separator.

Preparation of the battery: The positive electrode sheet, the separator, and the negative electrode sheet were stacked in order, so that the separator was between the positive electrode sheet and the negative electrode sheet to separate them, and they were laminated to obtain a bare battery cell. The bare battery cell was wrapped with an aluminum plastic film, then baked at 80°C to remove water, the electrolyte 40 was injected thereto and sealed. Thereafter, the sealed bare battery cell was kept standing and subjected to hot and cold pressing, formation, clamping and volume division to obtain the lithium-ion battery.

Example 2

In the electrolyte, the mass ratio of ethylene carbonate, ethyl methyl carbonate and dimethyl carbonate was 0.5:4.75:4.75, and other steps were the same as those described in Example 1.

Example 3

In the electrolyte, the mass ratio of ethylene carbonate, ethyl methyl carbonate and dimethyl carbonate was 1:4.5:4.5, and other steps were the same as those described in Example 1.

Example 4

In the electrolyte, the mass ratio of ethylene carbonate, ethyl methyl carbonate and dimethyl carbonate was 1.5:4.25:4.25, and other steps were the same as those described in Example 1.

Example 5

In the electrolyte, the mass ratio of ethylene carbonate, ethyl methyl carbonate and dimethyl carbonate was 3:3.5:3.5, and other steps were the same as those described in Example 1.

Example 6

In the electrolyte, the mass ratio of ethylene carbonate, ethyl methyl carbonate and dimethyl carbonate was 3.5:3.25:3.25, and other steps were the same as those described in Example 1.

Example 7

In the electrolyte, the mass ratio of ethylene carbonate, ethyl methyl carbonate and dimethyl carbonate was 4.5:2.75:2.75, and other steps were the same as those described in Example 1.

Example 8

In the electrolyte, the mass percentage of PS was 0.005 wt%, and other steps were the same as those described in Example 1.

Example 9

In the electrolyte, the mass percentage of PS was 0.01 wt%, and other steps were the same as those described in Example 1.

Example 10

In the electrolyte, the mass percentage of PS was 0.1 wt%, and other steps were the same as those described in Example 1.

Example 11

In the electrolyte, the mass percentage of PS was 3 wt%, the concentration of LiFSI was 0.6 mol/L, and other steps were the same as those described in Example 1.

Example 12

In the electrolyte, the mass percentage of PS was 5 wt%, and other steps were the same as those described in Example 1.

Example 13

In the electrolyte, the mass percentage of PS was 8 wt%, and other steps were the same as those described in Example 1.

Example 14

In the electrolyte, the mass percentage of VC was 0.05 wt%, and other steps were the same as those described in Example 1.

Example 15

In the electrolyte, the mass percentage of VC was 0.1 wt%, and other steps were the same as those described in Example 1.

Example 16

In the electrolyte, the mass percentage of VC was 0.5 wt%, and other steps were the same as those described in Example 1.

Example 17

In the electrolyte, the mass percentage of VC was 3 wt%, and other steps were the same as those described in Example 1.

Example 18

In the electrolyte, the mass percentage of VC was 10 wt%, and other steps were the same as those described in Example 1.

Example 19

In the electrolyte, the mass percentage of VC was 15 wt%, and other steps were the same as those described in Example 1.

Comparative Example 1

In the electrolyte, the mass ratio of ethylene carbonate, ethyl methyl carbonate and dimethyl carbonate was 0:5:5, and other operations were the same as those described in Example 1.

Comparative Example 2

In the electrolyte, PS was not added, and other operations were the same as those described in Example 1.

Comparative Example 3

In the electrolyte, VC was not added, and other operations were the same as those described in Example 1.

In the present disclosure, performance tests were performed on the lithium-ion batteries obtained in Examples 1 to 19 and Comparative Examples 1 to 3, such as tests on the capacity retention rate of the lithium-ion battery after cycles at the normal temperature and the capacity retention rate of the lithium-ion battery after cycles at high temperatures. The results are shown in Table 1.

In an embodiment of the present disclosure, the test on capacity retention rate after cycles at the normal temperature was carried out as follows. The lithium-ion battery was charged at a constant current of 1C to 4.2V at a temperature of 25°C, and then charged at a constant voltage of 4.2V until the current was less than 0.05C. After standing for 10 minutes, the lithium-ion battery was discharged to 2.5V at a constant current of 1C. The discharge capacity of the lithium-ion battery was tested under the circumstances, and the result was used as the discharge capacity of the first cycle. The above process was performed on the battery for multiple cycles, and the capacity retention rate of the battery after 400 cycles was calculated. Relative capacity retention rate after cycles was calculated according to the following formula:

$$\text{Capacity retention rate (\%)} = (\text{discharge capacity corresponding to 400 cycles/discharge capacity of the first cycle}) \times 100\%.$$

In an embodiment of the present disclosure, the test on capacity retention rate for cycles under high temperatures was carried out as follows. The lithium iron manganese phosphate battery was charged at a constant current of 1C to 4.2V at 45°C, then charged at a constant voltage of 4.2V until the current was less than 0.05C. After standing for 10 minutes, the lithium iron manganese phosphate battery was discharged to 2.5V at a constant current of 1C, and the discharge capacity of the lithium iron manganese phosphate battery was tested under the circumstances, and the result was used as the discharge capacity of the first cycle. The above process was performed on the battery for multiple cycles, and the capacity retention rate of the battery after 400 cycles was calculated. Relative capacity retention rate after cycles was calculated according to the following formula:

$$\text{Capacity retention rate (\%)} = (\text{discharge capacity corresponding to 400 cycles/discharge capacity of the first cycle}) \times 100\%.$$

Table 1. Performance test results of lithium-ion batteries in Examples 1 to 19 and Comparative Examples 1 to 3

| Group | Capacity retention rate (%) after 400 cycles at 25°C | Capacity retention rate (%) after 400 cycles at 45°C |
|---|---|---|
| Example 1 | 95.7 | 92.3 |
| Example 2 | 90.0 | 86.7 |
| Example 3 | 91.8 | 88.5 |
| Example 4 | 95.6 | 91.9 |
| Example 5 | 96.0 | 91.7 |
| Example 6 | 92.3 | 88.9 |
| Example 7 | 89.7 | 85.8 |
| Example 8 | 89.9 | 87.1 |
| Example 9 | 91.2 | 88.1 |

(continued)

| Group | Capacity retention rate (%) after 400 cycles at 25°C | Capacity retention rate (%) after 400 cycles at 45°C |
|---|---|---|
| Example 10 | 95.5 | 92.0 |
| Example 11 | 95.3 | 93.2 |
| Example 12 | 92.1 | 89.3 |
| Example 13 | 88.3 | 84.7 |
| Example 14 | 89.5 | 87.5 |
| Example 15 | 90.3 | 88.5 |
| Example 16 | 95.6 | 92.2 |
| Example 17 | 95.4 | 93.0 |
| Example 18 | 91.8 | 88.8 |
| Example 19 | 88.0 | 84.5 |
| Comparative Example 1 | 78.3 | 72.5 |
| Comparative Example 2 | 79.1 | 71.7 |
| Comparative Example 3 | 76.0 | 70.3 |

Please refer to Table 1. Comparing Examples 1 to 19 with Comparative Example 1, it can be seen that by adding ethylene carbonate to the electrolyte and controlling the amount of ethylene carbonate, the retention rate of the lithium-ion battery after cycles at normal temperature and the retention rate of the lithium-ion battery after cycles at high temperatures may be improved simultaneously. That is, by adding ethylene carbonate, the conductivity of the electrolyte may be increased, and the cycle performance of high-density lithium-ion batteries may be enhanced, and by controlling the content of ethylene carbonate, it is possible to prevent the deterioration of electrolyte stability caused by excessive content. Comparing Examples 1 to 19 with Comparative Example 2, it can be seen that by adding the positive electrode additive PS, a dense CEI film may be formed on the positive electrode, and the dynamics performance and cycle performance of lithium-ion batteries may be enhanced. Comparing Examples 1 to 19 with Comparative Example 3, it can be seen that by adding the negative electrode additive VC, a dense SEI film may be formed on the negative electrode, and the SEI film may be continuously repaired during the cycle, so as to reduce the damage to the negative electrode SEI film caused by the dissolution of manganese ions. In this way, it is possible to effectively improve the cycle life of lithium iron manganese phosphate batteries.

Please refer to Table 1. Comparative Examples 1 to 7 show that as the content of ethylene carbonate increases, the capacity retention rate at room temperature and high temperature first increases and then decreases. When ethylene carbonate accounts for 30 wt% of the non-aqueous solvent, the capacity retention rate is the highest, which shows that as the content of dimethyl carbonate increases, the dynamics performance of the lithium-ion battery improves, but when the content of dimethyl carbonate is too much, the oxidation stability of the electrolyte becomes poor, causing rapid capacity decay. Therefore, it is necessary to control the amount of the ethylene carbonate to ensure the performance of lithium-ion battery.

Please refer to Table 1. Comparing Example 1 with Examples 8 to 13, it can be seen that as the content of positive electrode additive PS increases, the capacity retention rate after cycles first increases and then decreases, and the capacity retention rate after cycles at normal temperature and the capacity retention rate after cycles at high temperatures change synchronously. When the content of PS is 3 wt%, the comprehensive performance of the lithium-ion battery is the optimal, which shows that as the content of PS increases, a dense CEI film may be formed on the positive electrode to prevent the oxidative decomposition of the electrolyte. However, if the content of PS is too high, the CEI film will be too thick, resulting in an increase in the interface resistance of the positive electrode, resulting in reduction of dynamics performance and cycle life of the lithium-ion battery.

Please refer to Table 1. Comparing Example 1 with Examples 14 to 19, it can be seen that as the content of negative electrode additive VC increases, the capacity retention rate after cycles first increases and then decreases. When the of content VC is between 0.5 wt% and 3 wt%, the comprehensive performance of lithium-ion battery reaches the optimal level, which shows that as the content of VC increases, a dense SEI film may be formed on the negative electrode, and the SEI film may be continuously repaired during the cycles, thus reducing the damage to the SEI film of the negative electrode caused by the dissolution of manganese ions, so as to effectively improve the cycle life of lithium manganese iron phosphate batteries. In the meantime, it is possible to prevent problems such as SEI damage or excessive impedance that occurs when the content of VC is too high or too low. That is, by adding ethylene carbonate, PS and VC to the electrolyte and controlling the content thereof, it is possible to improve the performance of lithium iron manganese phosphate batteries and enhance the cycle performance of the battery.

In summary, the present disclosure provides a lithium-ion battery and an application thereof. By selecting the ingredients of the non-aqueous solvent, the conductivity of the electrolyte may be improved, the oxidation stability of the electrolyte may be ensured, the dynamics performance of the lithium-ion battery may be enhanced, and the cycle performance may be improved. By controlling the positive electrode additives and the content thereof, a dense CEI film may be formed on the surface of the positive electrode to reduce oxidative decomposition of the electrolyte. By controlling the negative electrode additives and the content thereof, a dense SEI film may be formed on the negative electrode, and the SEI film may be continuously repaired during the cycles, thereby reducing the damage to the negative electrode SEI film caused by dissolution of manganese ion, and effectively improving the cycle life of lithium manganese iron phosphate batteries. By controlling the type and content of solvents, positive electrode additives, and negative electrode additives, it is possible to improve the stability of the electrolyte, enhance the cycle performance of the lithium-ion battery, and improve the performance of the lithium-ion battery at high temperatures.

**Claims**

1. A lithium-ion battery at least comprising:

   a positive electrode sheet (10), wherein a double-sided density of the positive electrode sheet (10) is greater than or equal to 35 mg/cm$^2$, and the positive electrode sheet (10) comprises a positive electrode active material, and the positive electrode active material comprises a lithium manganese iron phosphate;
   a negative electrode sheet (20);
   a separator (30) located between the positive electrode sheet (10) and the negative electrode sheet (20); and
   an electrolyte (40) filled among the positive electrode sheet (10), the negative electrode sheet (20) and the separator (30), wherein the electrolyte (40) comprises a non-aqueous solvent, the non-aqueous solvent comprises an ethylene carbonate, and a mass fraction of the ethylene carbonate accounts for 10 wt%~35 wt% in the non-aqueous solvent.

2. The lithium-ion battery according to claim 1, wherein a molecular formula of the lithium iron manganese phosphate is $Li_xMn_yFe_{1-y}PO_4$, where $0.95 \leq x \leq 1.05$ and $0.4 \leq y \leq 0.7$.

3. The lithium-ion battery according to claim 1, wherein a mass fraction of the ethylene carbonate accounts for 15 wt% ~30 wt% in the non-aqueous solvent.

4. The lithium-ion battery according to claim 1, wherein the electrolyte (40) further comprises a positive electrode film-forming additive, the positive electrode film-forming additive comprises a 1,3-propane sultone, and a mass content of the positive electrode film-forming additive accounts for 0.01 wt%~5 wt% in the electrolyte (40).

5. The lithium-ion battery according to claim 1, wherein the electrolyte (40) further comprises a negative electrode film-forming additive, the negative electrode film-forming additive comprises a vinylene carbonate, and a mass content of the negative electrode film-forming additive accounts for 0.1 wt~ 10 wt% in the electrolyte (40).

6. The lithium-ion battery according to claim 1, wherein the non-aqueous solvent further comprises any one or a combination of at least two of a dimethyl carbonate, an ethyl methyl carbonate, a propylene carbonate or a diethyl carbonate.

7. The lithium-ion battery according to claim 1, wherein the non-aqueous solvent further comprises an ethyl methyl carbonate and a dimethyl carbonate, and a mass ratio of the ethylene carbonate, the ethyl methyl carbonate and the dimethyl carbonate is (0.5-4.5) :(2.75-4.75):(2.75-4.75).

8. The lithium-ion battery according to claim 1, wherein a mass content of the non-aqueous solvent accounts for 60 wt% ~ 85 wt% in the electrolyte (40).

9. The lithium-ion battery according to claim 1, wherein the electrolyte (40) further comprises a lithium salt, and the lithium salt comprises any one or a combination of at least two of $LiPF_6$, $LiBF_4$, LiFSI, LiTFSI, LiBOB, LiODFP, LiODFB, $LiPO_2F_2$ or $CF_3SO_3Li$.

**10.** The lithium-ion battery according to claim 9, wherein a concentration of the lithium salt in the electrolyte(40) is 0.1 mol/L~2 mol/L.

**11.** An electrochemical device, comprising the lithium-ion battery according to any one of claims 1-10.

**Amended claims in accordance with Rule 137(2) EPC.**

**1.** A lithium-ion battery at least comprising:

a positive electrode sheet (10), wherein a double-sided density of the positive electrode sheet (10) is greater than or equal to 35 mg/cm$^2$, and the positive electrode sheet (10) comprises a positive electrode active material, and the positive electrode active material comprises a lithium manganese iron phosphate;
a negative electrode sheet (20);
a separator (30) located between the positive electrode sheet (10) and the negative electrode sheet (20); and
an electrolyte (40) filled among the positive electrode sheet (10), the negative electrode sheet (20) and the separator (30), wherein the electrolyte (40) comprises a non-aqueous solvent, the non-aqueous solvent comprises an ethylene carbonate, an ethyl methyl carbonate, and a dimethyl carbonate, and a mass fraction of the ethylene carbonate accounts for 10 wt%~35 wt% in the non-aqueous solvent, and a mass ratio of the ethylene carbonate, the ethyl methyl carbonate and the dimethyl carbonate is (0.5-4.5) :(2.75-4.75):(2.75-4.75).

**2.** The lithium-ion battery according to claim 1, wherein a molecular formula of the lithium iron manganese phosphate is $Li_xMn_yFe_{1-y}PO_4$, where $0.95 \leq x \leq 1.05$ and $0.4 \leq y \leq 0.7$.

**3.** The lithium-ion battery according to claim 1, wherein a mass fraction of the ethylene carbonate accounts for 15 wt% ~30 wt% in the non-aqueous solvent.

**4.** The lithium-ion battery according to claim 1, wherein the electrolyte (40) further comprises a positive electrode film-forming additive, the positive electrode film-forming additive comprises a 1,3-propane sultone, and a mass content of the positive electrode film-forming additive accounts for 0.01 wt%~5 wt% in the electrolyte (40).

**5.** The lithium-ion battery according to claim 1, wherein the electrolyte (40) further comprises a negative electrode film-forming additive, the negative electrode film-forming additive comprises a vinylene carbonate, and a mass content of the negative electrode film-forming additive accounts for 0.1 wt~ 10 wt% in the electrolyte (40).

**6.** The lithium-ion battery according to claim 1, wherein a mass content of the non-aqueous solvent accounts for 60 wt% ~ 85 wt% in the electrolyte (40).

**7.** The lithium-ion battery according to claim 1, wherein the electrolyte (40) further comprises a lithium salt, and the lithium salt comprises any one or a combination of at least two of $LiPF_6$, $LiBF_4$, LiFSI, LiTFSI, LiBOB, LiODFP, LiODFB, $LiPO_2F_2$ or $CF_3SO_3Li$.

**8.** The lithium-ion battery according to claim 7, wherein a concentration of the lithium salt in the electrolyte(40) is 0.1 mol/L~2 mol/L.

**9.** An electrochemical device, comprising the lithium-ion battery according to any one of claims 1-8.

Europäisches
Patentamt

European
Patent Office

Office européen
des brevets

# EUROPEAN SEARCH REPORT

**Application Number**

EP 23 21 4374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 404 253 A (SHENZHEN CAPCHEM TECHNOLOGY CO LTD) 7 July 2023 (2023-07-07) * Example 1;page 18, table 1; par. 73, 95 * | 1-11 | INV. H01M4/58 H01M10/0525 H01M10/0567 H01M10/0569 |

- - - - -

**TECHNICAL FIELDS SEARCHED (IPC)**

H01M

The present search report has been drawn up for all claims

| Place of search | Date of completion of the search | Examiner |
|---|---|---|
| Munich | 7 May 2024 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 4374

This annex lists the patent family members relating to the patent documents cited in  the above-mentioned European search report.
The members are as contained in the European Patent Office EDP file on
The European Patent Office is in no way liable for these particulars which are merely given for the purpose of information.

07-05-2024

| Patent document cited in search report | Publication date | Patent family member(s) | Publication date |
|---|---|---|---|
| CN 116404253 A | 07-07-2023 | NONE | |

For more details about this annex : see Official Journal of the European Patent Office, No. 12/82